# EUROPÄISCHE PATENTSCHRIFT

(11) **EP 3 872 938 B1**
(45) Veröffentlichungstag und Bekanntmachung des Hinweises auf die Patenterteilung: **05.10.2022**
(21) Anmeldenummer: 21153460.7
(22) Anmeldetag: 26.01.2021
(51) Int. Cl.: H01R 13/73, H01R 13/62

(54) **MONTAGEADAPTER**
MOUNTING ADAPTER
ADAPTATEUR DE MONTAGE

(30) Priorität: 27.02.2020 DE 102020105219
(43) Veröffentlichungstag der Anmeldung: 01.09.2021
(73) Patentinhaber: Wilhelm Rutenbeck GmbH & Co. KG, 58579 Schalksmühle (DE)
(72) Erfinder: Schubert, Matthias, 58579 Schalksmühle (DE)
(74) Vertreter: Köchling, Conrad-Joachim

(56) Entgegenhaltungen:
- CN-U- 205 911 502
- US-A- 4 874 904

## Beschreibung

Die Erfindung betrifft einen Montageadapter zur Befestigung an einer Elektronikdose, beispielsweise einer Unterputz- oder einer Aufputz-Elektronikdose, zur Aufnahme und Halterung von einem Keystone-Modul oder von zwei Keystone-Modulen, zumindest aufweisend eine Halteplatte mit Verbindungslochungen zur Verbindung mit der Elektronikdose, ferner aufweisend eine erste Ausnehmung, in die ein Einsatzteil zur Aufnahme und Halterung des Keystone-Moduls oder der Keystone-Module einsetzbar oder eingesetzt ist, wobei die Halteplatte Haltemittel aufweist, mittels derer das Einsatzteil und somit das daran angeordnete Keystone-Modul oder die daran angeordneten Keystone-Module wahlweise in einer geraden Lage, die etwa parallel zur Halteplatte des Montageadapters verläuft, oder in einer schräg zur Halteplatte des Montageadapters verlaufenden Lage befestigbar oder befestigt ist.

Die Verwendung von sogenannten Keystone-Modulen, die standardisierte Steckverbinder darstellen, findet in der Praxis sowohl bei privaten Netzwerk-Installationen, wie auch bei gewerblichen Netzwerk-Installationen eine stetig wachsende Verbreitung. Dabei sind die Keystone-Module als ein modulares Anschlusssystem für verschiedenste Anwendungen wie beispielsweise für Netzwerk-Anwendungen als RJ 45-Verbinder oder auch als RJ-11 oder für USB, HDMI oder dergleichen Ports verwendbar. Durch die Verwendung derartiger Keystone-Module ist es zudem ermöglicht, auch bei einer nachträglichen Erweiterung bestehender Systeme zusätzliche Leitungen zu verlegen und diese auf einfache Art und Weise in das bestehende System zu integrieren. Durch die bei allen Keystone-Modulen gleichen Abmessungen von ca. 14,8 x 19,3 mm können diese in entsprechende Öffnungen eingeführt und auf einfache Art und Weise eingerastet werden. Somit ist zur Montage derartiger Keystone-Module üblicherweise kein Spezialwerkzeug erforderlich und auch eine Demontage auf schnelle und einfache Art und Weise ohne Zuhilfenahme von Spezialwerkzeug ermöglicht.

Zur Montage in Deutschland und Westeuropa standardisierten Elektronikdosen, die insbesondere als Unterputz- aber auch als Aufputzvarianten auf dem Markt verbreitet sind, können mittels entsprechender Montageadapter üblicherweise maximal zwei Keystone-Module nebeneinander innerhalb einer Elektronikdose angeordnet werden.

Die Anordnung von mehr als zwei Keystone-Modulen ist aufgrund der durch die Elektronikdose vorgegebenen Platzverhältnisse in der Regel nicht möglich.

Bei einer im Stand der Technik bekannten und äußerst bewährten Lösung besteht der Montageadapter aus einer Halteplatte mit Verbindungslochungen zur Verbindung mit der Elektronikdose und einer Ausnehmung, in die ein Einsatzteil zur Aufnahme und Halterung des Keystone-Moduls beziehungsweise von zwei Keystone-Modulen einsetzbar oder eingesetzt ist. Gegebenenfalls kann dabei die Öffnung für das jeweilige Keystone-Modul abgedeckt sein und ein Abdeckteil mittels vorhandener Sollbruchstellen erst bei der Montage vor Ort entfernt werden. Bei den meisten in der Praxis verwendeten Lösungen erfolgt die Zuführung eines Steckers in das Keystone-Modul hinein etwa gerade. Dies bedeutet, dass die Zuführung des Steckers in das Keystone-Modul in einer etwa parallelen Lage zur Mittellängsachse der Elektronikdose erfolgt.

Aus der US 4 874 904 A ist ein Montageadapter zur Befestigung an einer Elektronikdose, beispielsweise einer Unterputz- oder einer Aufputz- Elektronikdose, zur Aufnahme und Halterung von einem Keystone- Modul oder von zwei Keystone- Modulen, zumindest aufweisend eine erste Ausnehmung, in die ein Einsatzteil zur Aufnahme und Halterung des Keystone- Moduls oder der Keystone- Module einsetzbar der eingesetzt ist, bekannt.

Zudem sind im Stand der Technik Montageadapter bekannt, bei denen das Keystone-Modul beziehungsweise die beiden nebeneinander angeordneten Keystone-Module schräg zur Halteplatte des Montageadapters angeordnet sind, sodass eine Zuführung des zu verbindenden Steckers in das Keystone-Modul schräg, also in einem Winkel von etwa 20° bis 60° zur Halteplatte, erfolgt. Da die zugeführten Stecker häufig eine gewisse Eigenlänge und zusätzlich noch eine an den Stecker nachfolgende Zugentlastung für das zugeführte Kabel aufweisen, können beispielweise Möbel bei einer schrägen Anordnung näher an den Montageadapter mit eingestecktem Kabel mit Stecker angeordnet werden.

Je nach gewünschter Montage der Keystone-Module müssen somit entweder Montageadapter zur geraden Montage der Keystone-Module oder zur schrägen Montage der Keystone-Module vorgehalten und vom Monteur zur Montage vor Ort mitgeführt werden.

Aufgrund des eingangs genannten Standes der Technik liegt der vorliegenden Erfindung die Aufgabe zugrunde, einen Montageadapter der eingangs genannten Art zu schaffen, bei dem die Montage des Keystone-Moduls oder der Keystone-Module sowohl in gerader als auch in schräg zur Halteplatte und somit zur Wand angeordneter Lage ermöglicht ist, bei der nur eine äußerst geringe Anzahl an Teilen bei der Montage vor Ort vorzuhalten ist, die kostengünstig und einfach herstellbar ist und dabei eine hohe Lebensdauer aufweist.

Zur Lösung dieser Aufgabe schlägt die Erfindung vor, dass die Haltemittel zur Befestigung des Einsatzteils in der schräg zur Halteplatte des Montageadapters verlaufenden Lage durch von der Halteplatte abragende und in die Elektronikdose hineinragende Stege mit Rastvorsprüngen gebildet sind, die eine schräg zur Halteplatte verlaufende Anlagefläche für das Einsatzteil bilden, die mit am Einsatzteil ausgebildeten oder angeordneten Rastvorsprüngen und Abwinklungen korrespondieren, wobei die Rastvorsprünge und Abwinklungen des Einsatzteils die Stege mit Rastvorsprüngen der Halteplatte umgreifen und an diesen verrasten, wobei ferner zur Befestigung des Einsatzteils in der parallel zur Halteplatte des Montageadapters verlaufenden Lage die Rastvorsprünge und Abwinklungen des Einsatzteils einerseits in an der Halteplatte ausgebildete dritte Ausnehmungen eingreifen und dort verrasten und andererseits die Seitenrandkante der ersten Ausnehmung der Halteplatte hintergreifen und dort verhaken.

Dabei weist die Halteplatte Haltemittel auf, mittels derer das Einsatzteil und somit das daran angeordnete Keystone-Modul oder die daran angeordneten Keystone-Module wahlweise in einer geraden Lage, die etwa parallel zur Halteplatte des Montageadapters verläuft, oder in einer schräg zur Halteplatte des Montageadapters verlaufenden Lage befestigbar oder befestigt ist.

Mittels einer derartigen erfindungsgemäßen Lösung kann der Monteur vor Ort wählen, ob das beziehungsweise die Keystone-Module in einer geraden Lage innerhalb der Elektronikdose und somit an der Halteplatte des Montageadapters angeordnet und befestigt werden oder in einer schräg zur Halteplatte angeordneten Lage angeordnet und befestigt werden. Die erfindungsgemäße Lösung ermöglicht dabei die Verwendung der Komponenten des Montageadapters sowohl für die gerade Einbaulage als auch für die schräge Einbaulage der beziehungsweise des Keystone-Moduls. Es müssen somit nicht verschiedene Teile vom Monteur vorgehalten und je nach gewünschter Montageart, also schräger oder gerader Einbaulage des beziehungsweise der Keystone-Module, ausgewählt und verwendet werden. Mit denselben Teilen kann somit bei der Montage vor Ort entschieden werden, ob die Keystone-Module gerade oder schräg zur Halteplatte eingebaut beziehungsweise befestigt werden.

Je nach gewünschter Einbaulage wird somit das Einsatzteil in entweder einer etwa parallelen Lage zur Halteplatte an der Halteplatte befestigt oder in einer etwa schrägen Lage an den Haltemitteln der Halteplatte angeordnet und befestigt. Anschließend können auf an sich bekannte Art und Weise das Keystone-Modul oder die Keystone-Module in Aufnahmeöffnungen des Einsatzteils mit den vorgegebenen Maßen ca. 14,8 x 19,3 mm eingeführt und daran beispielsweise mittels Verrasten fixiert werden.

Zudem ist mittels der erfindungsgemäßen Lösung der Montageaufwand vor Ort für den Monteur nicht erhöht und die Gestaltungsfreiheit bei der Wahl der Einbaulage gegenüber bestehenden Lösungen deutlich erweitert, ohne dabei zusätzliche Teile zu bevorraten.

Dabei ist die erfindungsgemäße Lösung kostengünstig und einfach herzustellen und weist eine hohe Lebensdauer auf.

Durch die Anordnung derartiger Stege mit Rastvorsprüngen, die eine schräg zur Halteplatte verlaufende Anlagefläche für das Einsatzteil bilden, kann bei gewünschter schräger Einbaulage das Einsatzteil zunächst an die Stege herangeführt werden und anschließend mittels Ausübens von händischem Druck mit den Stegen verbunden werden. Dabei umgreifen die Rastvorsprünge und Abwinklungen des Einsatzteils die Stege insbesondere im Bereich ihrer Rastvorsprünge, sodass bei Erreichen der Montagesolllage die Rastvorsprünge der Stege mit den Rastvorsprüngen und Abwinklungen der Halteplatte in Kontakt stehen und an diesen verrasten, um das Einsatzteil in dieser gewünschten Lage, hier in der schrägen Lage, zu fixieren.

Zur Fixierung des Einsatzteils in der geraden Lage, in der sich das Einsatzteil etwa parallel zu der von der Halteplatte des Montageadapters aufgespannten Ebene erstreckt, werden nach einer entsprechenden Vorpositionierung des Einsatzteils an der Halteplatte die Abwinklungen des Einsatzteils in die an der Halteplatte hierfür ausgebildeten dritten Ausnehmungen eingeführt, bis diese die Montagesollage, die gleichzeitig eine Rastlage bildet, erreichen. Sobald die Rastvorsprünge und die Abwinklungen des Einsatzteils die Montagesolllage erreicht haben, hintergreifen die Rastvorsprünge und Abwinklungen die dritten Ausnehmungen der Halteplatte und fixieren somit das Einsatzteil in dieser etwa parallel zur Halteplatte angeordneten Lage an der Halteplatte. Anschließend können auf sich bekannte Art und Weise sowohl bei der schrägen Anordnung des Einsatzteils als auch bei der geraden, also etwa parallel zur Halteplatte angeordneten Lage des Einsatzteils der oder die Keystone-Module in das Einsatzteil eingeführt und dort beispielsweise mittels Verrasten fixiert werden.

Zu einer abschließenden Montage wird nun auf an sich bekannter Art und Weise die Halteplatte mittels der Verbindungslochungen mit der Elektronikdose verbunden und an dieser fixiert und zusätzlich kann auch auf an sich bekannter Art und Weise nun eine gewünschte Designabdeckung auf der Halteplatte angebracht werden.

Durch die Anordnung der erfindungsgemäßen Haltemittel ist ein dauerhafter und sicherer Halt des Einsatzteils und somit der am Einsatzteil befestigten Keystone-Module ermöglicht, wodurch auch eine häufige Anzahl von Steckvorgängen von Steckern, die in das Keystone-Modul eingesteckt und gegebenenfalls wieder entfernt werden, ermöglicht ist.

Dabei kann besonders bevorzugt vorgesehen sein, dass die Stege im Bereich ihrer Rastvorsprünge Einführschrägen aufweisen.

Durch die Anordnung derartiger Einführschrägen ist die Verbindung des Einsatzteils mit der Halteplatte in der schrägen Lage für den Monteur vor Ort deutlich erleichtert.

Weiter kann besonders bevorzugt vorgesehen sein, dass die schräg zur Halteplatte verlaufenden Anlageflächen für das Einsatzteil einen Winkel von 20 bis 60 Grad, insbesondere 30 Grad zur Halteplatte aufweist.

Je nach Ausbildung der Schrägen, die die Anlagefläche für das Einsatzteil bilden, kann der Montagewinkel des später eingesetzten Keystone-Moduls gegenüber der Halteplatte bestimmt werden. In der Praxis haben sich dabei insbesondere Winkel von 30° gegenüber der Halteplatte bewährt.

Darüber hinaus kann besonders bevorzugt vorgesehen sein, dass die Halteplatte eine auf eine Seitenrandkante der ersten Ausnehmung aufschiebbare oder aufgeschobene Blende mit einer schrägen Sichtfläche aufweist, die in der Montagesolllage bei einem schräg montierten Keystone-Modul einen zwischen Modul und Halteplatte entstehenden Sichtspalt abdeckt.

Die Verwendung und Anordnung einer derartigen Blende ist insbesondere bei der schrägen Montage des Einsatzteils und somit der oder des Keystone-Moduls sinnvoll, da durch eine derartige erfindungsgemäße Blende der Bereich zwischen Modul und Seitenrandkante der Halteplatte der einen Sichtspalt bildet, mittels einer derartigen Blende abdeckbar ist, sodass bei einer Betrachtung von außen bei entsprechende montierter Blende kein Sichtspalt mehr zu sehen ist.

Zudem wird durch die Verdeckung des Sichtspaltes nicht nur die Optik verbessert, sondern gleichzeitig auch ein Schutz vor eindringenden Verunreinigungen ermöglicht.

Falls der Monteur vor Ort die schräge Variante wählt und das Einsatzteil schräg zur Halteplatte montiert, so kann er auf einfache Art und Weise eine erfindungsgemäße derartige Blende auf die Seitenrandkante der Halteplatte aufschieben, um den dort entstehenden Sichtspalt abzudecken.

Dabei kann besonders bevorzugt vorgesehen sein, dass die Blende Rastvorsprünge aufweist, die in der auf die Halteplatte aufgeschobenen Solllage in an der Halteplatte ausgebildete zweite Ausnehmungen eingreifen und die Blende in dieser Lage an der Halteplatte fixieren.

Mittels derartiger erfindungsgemäßer Rastvorsprünge kann die Blende auf besonders einfache Art und Weise in der aufgeschobenen Solllage an der Halteplatte fixiert werden, um in dieser Lage zu verbleiben und ein ungewünschtes Verschieben gegenüber der Halteplatte zu verhindern.

Zudem kann dabei besonders bevorzugt vorgesehen sein, dass die Halteplatte optisch sichtbare Positionierhilfen, beispielsweise aufgedruckte, geätzte oder eingeprägte Pfeile aufweist, die eine lagegenaue Zuführung der Blende erleichtern.

Mittels der optisch sichtbaren Positionierhilfen ist es dem Monteur vor Ort zusätzlich erleichtert, die Blende lagegenau zuzuführen beziehungsweise auf der Halteplatte zu positionieren und in die Fixierlage zu verbringen. Hierzu benötigt der Monteur vor Ort nur eine äußerst geringe Erfahrung, da durch die optischen Positionierhilfen die Positionierung der Blende deutlich erleichtert ist.

Schließlich kann besonders bevorzugt vorgesehen sein, dass die Halteplatte aus Zinkdruckguss besteht und dass das Einsatzteil aus Zinkdruckguss oder aus Kunststoff besteht.

In der Praxis hat es sich besonders bewährt, sowohl die Halteplatte als auch das Einsatzteil aus Zinkdruckguss herzustellen. Diese Variante ermöglicht die Aufnahme besonders hoher Kräfte, insbesondere falls später Zug- oder Druckkräfte durch einen in ein Keystone-Modul eingeführten Stecker mit Kabel auftreten sollten. Alternativ kann auch das Einsatzteil aus Kunststoff bestehen.

Ein Ausführungsbeispiel der Erfindung ist in den Figuren dargestellt im Folgenden näher beschrieben.

Es zeigt:
- Figur 1: ein erstes Ausführungsbeispiel der Erfindung mit schräg eingebautem Keystone-Modul mit aufgesetzter Designabdeckung;
- Figur 2: desgleichen mit gerade Angeordnetem Keystone-Modul;
- Figur 3: eine erfindungsgemäße Halteplatte Von vorne gesehen;
- Figur 4: desgleichen von hinten gesehen;
- Figur 5: ein erfindungsgemäßes Einsatzteil schräg von vorne gesehen;
- Figur 6: desgleichen schräg von hinten gesehen;
- Figur 7: eine Halteplatte mit schräg montiertem Einsatzteil von schräg hinten gesehen;
- Figur 8: eine Einsatzplatte mit gerade (parallel) montiertem Einsatzteil schräg von hinten gesehen;
- Figur 9: desgleichen schräg von vorne gesehen;
- Figur 10: eine erste Ansicht einer Blende;
- Figur 11: desgleichen in einer weiteren Ansicht;
- Figur 12: eine Halteplatte mit montierter Blende;
- Figur 13: desgleichen von hinten gesehen.

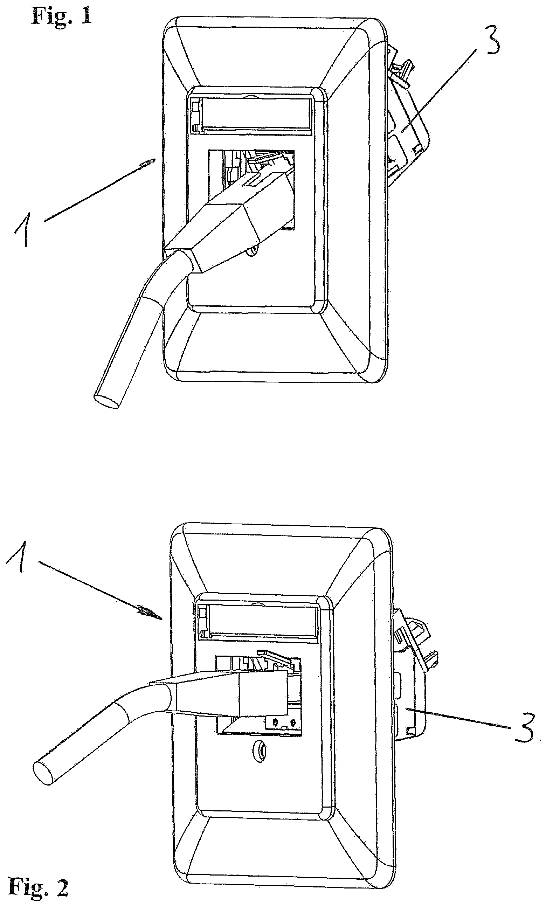

In den Figuren ist ein Montageadapter 1 zur Befestigung an einer Elektronikdose gezeigt. Dabei zeigen die Figuren 1 und 2 jeweils einen vollständigen Montageadapter mit aufgesetzter Designabdeckung und die weiteren Figuren Teile des Montageadapters 1.

Ein derartiger Montageadapter 1 kann an einer Elektronikdose, beispielsweise einer Unterputz- oder einer Aufputz-Elektronikdose befestigt werden. Der Montageadapter 1 dient dabei zur Aufnahme und Halterung von einem Keystone-Modul 3 oder von zwei Keystone-Modulen 3. Der Montageadapter 1 weist zumindest eine Halteplatte 2 mit Verbindungslochungen 4 zur Verbindung mit der Elektronikdose auf. Ferner weist der Montageadapter 1 eine erste Ausnehmung 5 auf, in die ein Einsatzteil 6 zur Aufnahme und Halterung des Keystone-Moduls 3 oder der Keystone-Module 3 einsetzbar oder eingesetzt ist.

Erfindungsgemäß weist die Halteplatte 2 Haltemittel auf, mittels derer das Einsatzteil 6 und somit das daran angeordnete Keystone-Modul 3 oder die daran angeordneten Keystone-Module 3 wahlweise in einer geraden Lage, die etwa parallel zur Halteplatte 2 des Montageadapters 1 verläuft, oder in einer schräg zur Halteplatte 2 des Montageadapters 1 verlaufenden Lage befestigbar oder befestigt ist.

Mittels einer derartigen erfindungsgemäßen Lösung kann mit einer nur geringen Anzahl an mitzuführenden und zu bevorratenden Teilen ein Monteur vor Ort wählen, ob die oder das Keystone-Modul 3 gerade in die Elektronikdose und somit gerade an die Halteplatte 2 angebracht wird oder ob das oder die Keystone-Module 3 in einer schrägen Lage zur Halteplatte 2 des Montageadapters 1 angeordnet wird beziehungsweise werden. Je nach Einsatzzweck kann es notwendig sein oder gewünscht sein, die aus den Keystone-Modulen 3 herausragenden Stecker und Kabel schräg gegenüber dem Montageadapter 1 und somit der Halteplatte 2 aus dem Montageadapter 1 herauszuführen. Dies kann beispielsweise dann sinnvoll sein, wenn Gegenstände wie Möbel oder dergleichen vor dem Montageadapter 1 platziert werden sollen, da in der schräg herausgeführten Lage ein geringerer Abstand des Möbels zur Wand ermöglicht ist, als bei einer gerade herausgeführten Lage.

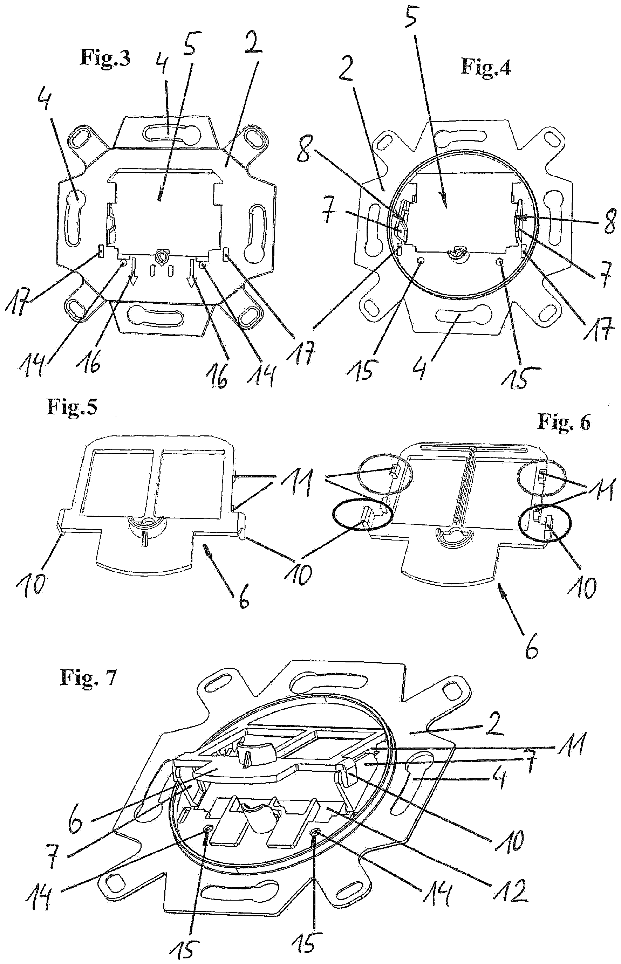

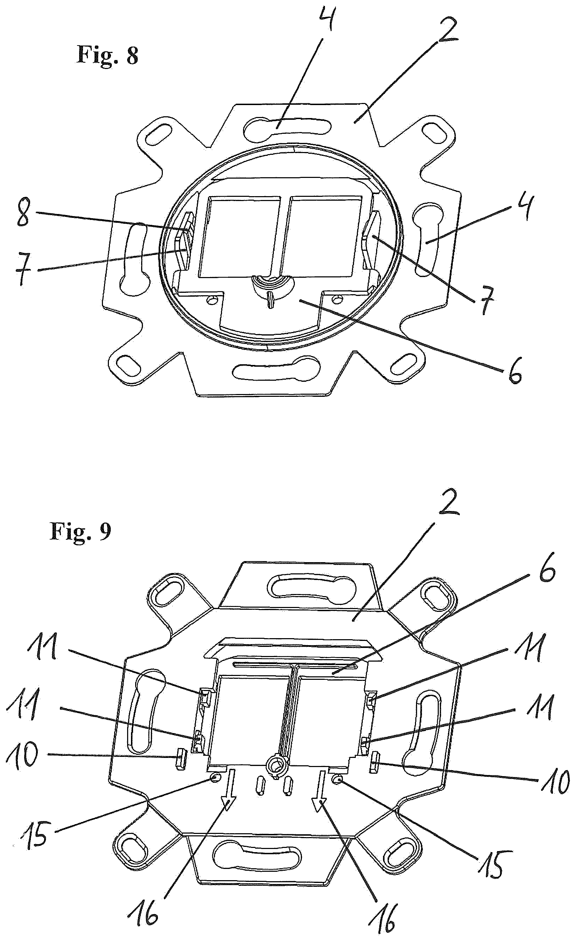

Wie insbesondere aus den Figuren 4, 7 und 8 ersichtlich, weist die Halteplatte 2 des Montageadapters 1 von der Halteplatte 2 abragende und in die Elektronikdose hineinragende Stege 7 mit Rastvorsprüngen 8 auf. Die Stege 7 mit den Rastvorsprüngen 8 bilden eine schräg zur Halteplatte 2 verlaufende Anlagefläche 9 für das Einsatzteil 6. Für die schräge Montage des Einsatzteils 6 an der Halteplatte 2 wird dieses zuerst an den Anlageflächen 9 der Stege 7 vorpositioniert und anschließend durch Ausüben händischen Drucks an die Anlagefläche 9 angelegt. Sobald das Einsatzteil 6 diese schräge Solllage erreicht hat, verrasten die Rastvorsprünge 8 an den Stegen 7 der Halteplatte 2 mit den Abwinklungen 10 und den Rastvorsprüngen 11 des Einsatzteils 6 und sichern und fixieren das Einsatzteil 6 in dieser schrägen Lage an der Halteplatte 2.

Anschließend kann auf an sich bekannte Art und Weise das oder die Keystone-Module 3 in die Aufnahmeöffnung des Einsatzteils 6 eingeführt und dort verbunden werden.

Das so befestigte Keystone-Modul 3 befindet sich nun in einer etwa schräg gegenüber der Halteplatte 2 angeordneten Lage, sodass ein in das Keystone-Modul 3 eingesteckter Stecker mit samt Kabel und gegebenenfalls Zugentlastung gegenüber der Gebäudewand und somit der Halteplatte 2 und dem Montageadapter 1 schräg herausgeführt werden kann.

Zur geraden Befestigung des Einsatzteils 6 an der Halteplatte 2 des Montageadapters 1, also in einer Lage, in der sich das Einsatzteil 6 etwa in einer parallelen Lage zur Halteplatte 2 befindet, kann das Einsatzteil 6 zunächst in dieser Lage an der Rückseite der Halteplatte 2 vorpositioniert werden. Anschließend kann durch Ausüben händischen Drucks eine Verrastung in dieser Lage gegenüber der Halteplatte erfolgen. Dabei greifen die Abwinklungen 10 und die Rastvorsprünge 11 des Einsatzteils 6 in an der Halteplatte 2 ausgebildete dritte Ausnehmungen 17 ein und durchgreifen diese dritten Ausnehmungen 17. Zudem hintergreifen die Rastvorsprünge 11 des Einsatzteils 6 die Seitenrandkante der ersten Ausnehmung 5 der Halteplatte 2 und verhaken dort um das Einsatzteil 6 in dieser etwa parallel zur Halteplatte 2 angeordneten Lage an der Halteplatte 2 zusätzlich zu fixieren.

Anschließend können auf an sich bekannte Art und Weise das oder die Keystone-Module 3 an dem Einsatzteil 6 befestigt werden, um somit eine gerade Zuführung von Steckern oder Kabeln in das Keystone-Modul 3 zu ermöglichen.

Zur erleichterten Verbindung weisen die Stege 7 im Bereich ihrer Rastvorsprünge 8 Einführschrägen auf. Hierdurch ist die Verbindung des Einsatzteils 6 in der schrägen Lage deutlich erleichtert.

Die schräg zur Halteplatte 2 verlaufenden Anlageflächen 9 der Stege 7 bilden einen Winkel zwischen Halteplatte 2 und Einsatzteil 6 je nach Ausführungsform von etwa 20° bis etwa 60°. In der Praxis hat sich besonders die Ausbildung eines Winkels von 30° zwischen Halteplatte 2 und Einsatzteil 6 bewährt.

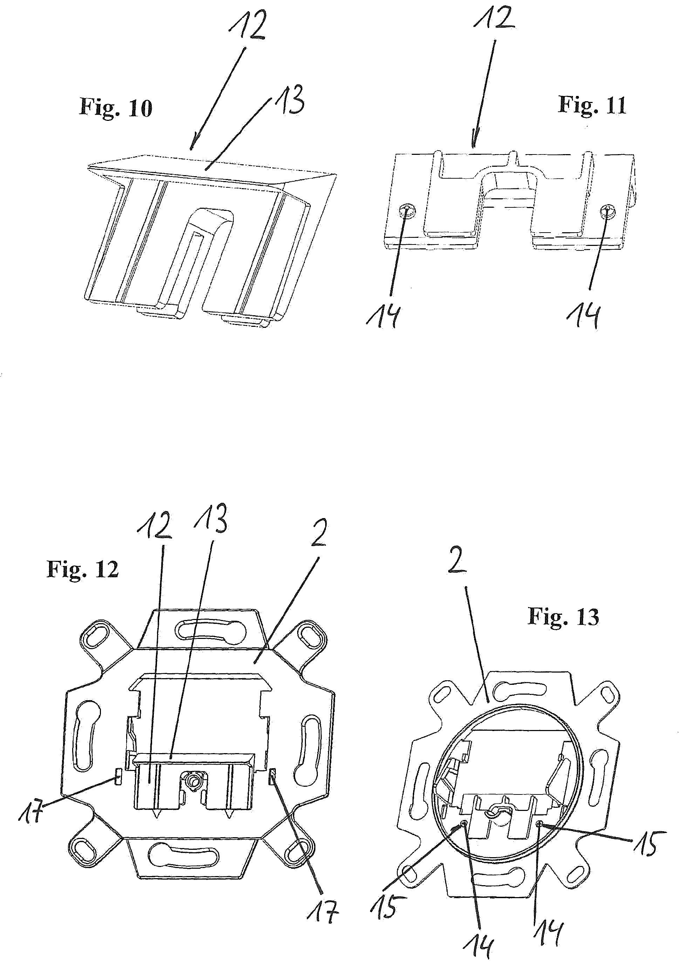

Die Halteplatte 2 kann zudem eine auf eine Seitenrandkante der ersten Ausnehmung 5 aufschiebbare oder aufgeschobene Blende 12 mit einer schrägen Sichtfläche 13 aufweisen. Diese ist als Einzelteil in den Figuren 10 und 11 dargestellt und in der Figur 7 in der montierten Lage an einer Halteplatte 2 gezeigt. Die Verwendung einer derartigen Blende 12 mit einer schrägen Sichtfläche 13 ist ausschließlich bei der schrägen Montage des Einsatzteils 6 vorgesehen, da sich bei dieser Montagelage zwischen Einsatzteil 6 und Randkante der ersten Ausnehmung 5 der Halteplatte 2 ein Sichtspalt bildet, durch den beispielsweise Verschmutzungen eindringen könnten. Um diesen Sichtspalt abzudecken, kann die erfindungsgemäße Blende 12 mit schräger Sichtfläche 13 auf die Halteplatte 2 aufgeschoben werden und diesen Sichtspalt wirksam verdecken, um ein Eindringen von Verschmutzungen zu verhindern.

Zur Fixierung der Blende 12 an der Halteplatte 2 sind an der Blende 12 Rastvorsprünge 14 ausgebildet, die in der Montagesolllage in auf der Halteplatte 2 ausgebildete zweite Ausnehmungen 15 eingreifen, um die Blende 12 in dieser Lage an der Halteplatte 2 zu fixieren.

Zur vereinfachten Montage der Blende 12 kann die Halteplatte 2 optisch sichtbare Positionierhilfen, im Ausführungsbeispiel aufgedruckte Pfeile 16 aufweisen, die eine lagegenaue Zuführung der Blende 12 auch für ungeübte Monteure erleichtern. Alternativ und in den Figuren nicht gezeigt können diese Positionierhilfen in Form von Pfeilen 16 auch auf das Material mittels Ätzen und Prägen aufgebracht sein.

Im Ausführungsbeispiel bestehen die Halteplatte 2 und das Einsatzteil 6 aus Zinkdruckguss. Alternativ ist auch die Herstellung eines Einsatzteils 6 aus Kunststoff möglich.

Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

### Bezugszeichen:

- 1: Montageadapter
- 2: Halteplatte
- 3: Keystone-Modul
- 4: Verbindungslochungen an 2
- 5: erste Ausnehmung an 2
- 6: Einsatzteil
- 7: Stege an 2
- 8: Rastvorsprünge an 7
- 9: schräge Ablagefläche an 7
- 10: Abwinklung an 6
- 11: Rastvorsprünge an 6
- 12: Blende
- 13: schräge Sichtfläche
- 14: Rastvorsprünge an 12
- 15: zweite Ausnehmungen an 2
- 16: Pfeile an 2
- 17: dritte Ausnehmungen an 2

## Patentansprüche

1. Montageadapter (1) zur Befestigung an einer Elektronikdose, beispielsweise einer Unterputzoder einer Aufputz-Elektronikdose, zur Aufnahme und Halterung von einem Keystone-Modul (3) oder von zwei Keystone-Modulen (3), zumindest aufweisend eine Halteplatte (2) mit Verbindungslochungen (4) zur Verbindung mit der Elektronikdose, ferner aufweisend eine erste Ausnehmung (5), in die ein Einsatzteil (6) zur Aufnahme und Halterung des Keystone-Moduls (3) oder der Keystone-Module (3) einsetzbar oder eingesetzt ist, wobei die Halteplatte (2) Haltemittel aufweist, mittels derer das Einsatzteil (6) und somit das daran angeordnete Keystone-Modul (3) oder die daran angeordneten Keystone-Module (3) wahlweise in einer geraden Lage, die etwa parallel zur Halteplatte (2) des Montageadapters (1) verläuft, oder in einer schräg zur Halteplatte (2) des Montageadapters (1) verlaufenden Lage befestigbar oder befestigt ist, **dadurch gekennzeichnet, dass** die Haltemittel zur Befestigung des Einsatzteils (6) in der schräg zur Halteplatte (2) des Montageadapters (1) verlaufenden Lage durch von der Halteplatte (2) abragende und in die Elektronikdose hineinragende Stege (7) mit Rastvorsprüngen (8) gebildet sind, die eine schräg zur Halteplatte (2) verlaufende Anlagefläche (9) für das Einsatzteil (6) bilden, die mit am Einsatzteil (6) ausgebildeten oder angeordneten Rastvorsprüngen (11) und Abwinklungen (10) korrespondieren, wobei die Rastvorsprünge (11) und Abwinklungen (10) des Einsatzteils (6) die Stege (7) mit Rastvorsprüngen (8) der Halteplatte (2) umgreifen und an diesen verrasten, wobei ferner zur Befestigung des Einsatzteils (6) in der parallel zur Halteplatte (2) des Montageadapters (1) verlaufenden Lage die Rastvorsprünge (11) und Abwinklungen (10) des Einsatzteils (6) einerseits in an der Halteplatte (2) ausgebildete dritte Ausnehmungen (17) eingreifen und andererseits die Seitenrandkante der ersten Ausnehmung (5) der Halteplatte (2) hintergreifen und dort verhaken.

2. Montageadapter (1) nach Anspruch 1, **dadurch gekennzeichnet, dass** die Stege (7) im Bereich ihrer Rastvorsprünge (8) Einführschrägen aufweisen.

3. Montageadapter (1) nach einem der Ansprüche 1 oder 2, **dadurch gekennzeichnet, dass** die schräg zur Halteplatte (2) verlaufenden Anlageflächen (9) für das Einsatzteil (6) einen Winkel von 20 bis 60 Grad, insbesondere 30 Grad zur Halteplatte (2) aufweisen.

4. Montageadapter (1) nach einem der Ansprüche 1 bis 3, **dadurch gekennzeichnet, dass** die Halteplatte (2) eine auf eine Seitenrandkante der ersten Ausnehmung (5) aufschiebbare oder aufgeschobene Blende (12) mit einer schrägen Sichtfläche (13) aufweist, die in der Montagesolllage bei einem schräg montierten Keystone-Modul (3) einen zwischen Modul (3) und Halteplatte (2) entstehenden Sichtspalt abdeckt.

5. Montageadapter (1) nach Anspruch 4, **dadurch gekennzeichnet, dass** die Blende (12) Rastvorsprünge (14) aufweist, die in der auf die Halteplatte (2) aufgeschobenen Solllage in an der Halteplatte (2) ausgebildete zweite Ausnehmungen (15) eingreifen und die Blende (12) in dieser Lage an der Halteplatte (2) fixieren.

6. Montageadapter (1) nach einem der Ansprüche 4 oder 6, **dadurch gekennzeichnet, dass** die Halteplatte (2) optisch sichtbare Positionierhilfen, beispielsweise aufgedruckte, geätzte oder eingeprägte Pfeile (16) aufweist, die eine lagegenaue Zuführung der Blende (12) erleichtern.

7. Montageadapter (1) nach einem der Ansprüche 1 bis 6, **dadurch gekennzeichnet, dass** die Halteplatte (2) aus Zinkdruckguss besteht und dass das Einsatzteil aus Zinkdruckguss oder aus Kunststoff besteht.

## Claims

1. A mounting adapter (1) for being fastened to an electronics box, for instance, a flush-mount or a surface-mount electronics box, for receiving and holding a Keystone module (3) or two Keystone modules (3), at least including a holding plate (2) with connecting holes (4) for connection to the electronics box, further including a first recess (5), into which an insert piece (6) for receiving and holding the Keystone module (3) or the Keystone modules (3) is inserted or can be inserted, the holding plate (2) comprising holding means, by means of which the insert piece (6) and thus the Keystone module (3) arranged thereat or the Keystone modules (3) arranged thereat, optionally, can be fastened or is fastened in a straight position extending approximately in parallel to the holding plate (2) of the mounting adapter (1), or in a position extending transversely to the holding plate (2) of the mounting adapter (1), **characterized by that** the holding means for fastening the insert piece (6) in the position extending transversely to the holding plate (2) of the mounting adapter (1) are formed by webs (7) extending from the holding plate (2) and projecting into the electronics box and having locking protrusions (8), said webs (7) forming an abutment face (9) extending transversely to the holding plate (2) for the insert piece (6), said locking protrusions (8) corresponding to locking protrusions (11) and bends (10) formed or arranged at the insert piece (6), the locking protrusions (11) and bends (10) of the insert piece (6) embracing the webs (7) with locking protrusions (8) of the holding plate (2) and being locked thereat, further, for fastening the insert piece (6) in the position extending in parallel to the holding plate (2) of the mounting adapter (1), the locking protrusions (11) and bends (10) of the insert piece (6), on the one hand, engaging in third recesses (17) formed at the holding plate (2) and, on the other hand, engaging behind the side edge of the first recess (5) of the holding plate (2) and hooking there.

2. The mounting adapter (1) of claim 1, **characterized by that** the webs (7) have introduction slopes in the region of their locking protrusions (8).

3. The mounting adapter (1) of one of claims 1 or 2, **characterized by that** the abutment faces (9) for the insert piece (6) extending transversely to the holding plate (2) have an angle of 20 to 60 degrees, in particular 30 degrees to the holding plate (2).

4. The mounting adapter (1) of one of claims 1 to 3, **characterized by that** the holding plate (2) includes a shield (12) with an inclined viewing face (13) slid or to be slid onto a side edge of the first recess (5), which, in the intended mounting position with a transversely mounted Keystone module (3), covers a viewing gap being formed between module (3) and holding plate (2).

5. The mounting adapter (1) of claim 4, **characterized by that** the shield (12) includes locking protrusions (14), which, in the intended mounting position slid onto the holding plate (2), engage in second recesses (15) provided at the holding plate (2) and fix the shield (12) in this position at the holding plate (2).

6. The mounting adapter (1) of one of claims 4 or 6, **characterized by that** the holding plate (2) includes optically visible positioning aids, for instance, imprinted, etched, or embossed arrows (16), which facilitate a precisely positioned introduction of the shield (12).

7. The mounting adapter (1) of one of claims 1 to 6, **characterized by that** the holding plate (2) is made of zinc die-cast, and that the insert piece is made of zinc die-cast or a plastic material.

## Revendications

1. Adaptateur de montage (1) à la fixation à une boîte électronique, par exemple, une boîte électronique encastrable ou montée en saillie, pour loger et retenir un module Keystone (3) ou deux modules Keystone (3), au moins comportant une platine (2) avec des trous de liaison (4) pour la liaison à la boîte électronique, en outre comportant un premier évidement (5), dans lequel une pièce d'insertion (6) pour la réception et le support du module Keystone (3) ou des modules Keystone (3) est insérée ou peut être insérée, la platine (2) comprenant des moyens de retenue, au moyen desquels la pièce d'insertion (6) et donc le module Keystone (3) arrangé à celle-ci ou les modules Keystone (3) arrangés à celle-ci, optionnellement peuvent être ou sont fixés dans une position rectiligne s'étendant environ en parallèle à la platine (2) de l'adaptateur de montage (1), ou dans une position s'étendant transversalement à la platine (2) de l'adaptateur de montage (1), **caractérisé en ce que** les moyens de retenue pour fixer la pièce d'insertion (6) dans la position s'étendant transversalement à la platine (2) de l'adaptateur de montage (1) sont réalisés par des entretoises (7) s'étendant à partir de la platine (2) et faisant saillie dans la boîte électronique et ayant des ergots d'encliquetage (8), ces entretoises (7) réalisant une surface d'appui (9) s'étendant transversalement à la platine (2) pour la pièce d'insertion (6), ces ergots d'encliquetage (8) correspondant à des ergots d'encliquetage (11) et rabats (10) réalisés ou arrangés à la pièce d'insertion (6), les ergots d'encliquetage (11) et rabats (10) de la pièce d'insertion (6) enveloppant les entretoises (7) avec les ergots d'encliquetage (8) de la platine (2) et étant encliquetés à ceux-ci, en outre, pour fixer la pièce d'insertion (6) dans la position s'étendant en parallèle à la platine (2) de l'adaptateur de montage (1), les ergots d'encliquetage (11) et rabats (10) de la pièce d'insertion (6), d'un côté, engageant dans des troisièmes évidements (17) réalisés à la platine (2) et, de l'autre côté, engageant derrière le bord latéral du premier évidement (5) de la platine (2) et s'accrochant à celui-ci.

2. Adaptateur de montage (1) selon la revendication 1, **caractérisé en ce que** les entretoises (7) ont des rampes d'introduction dans la région de leurs ergots d'encliquetage (8).

3. Adaptateur de montage (1) selon une des revendications 1 ou 2, **caractérisé en ce que** les surfaces d'appui (9) pour la pièce d'insertion (6) s'étendant transversalement à la platine (2) ont un angle de 20 à 60 degrés, en particulier 30 degrés par rapport à la platine (2).

4. Adaptateur de montage (1) selon une des revendications 1 à 3, **caractérisé en ce que** la platine (2) comporte un cache (12) avec une surface de visualisation (13) inclinée glissée ou à être glissée sur un bord latéral du premier évidement (5), qui, dans la position de montage de consigne avec un module Keystone (3) monté transversalement, recouvre une fente de visualisation étant réalisée entre le module (3) et la platine (2).

5. Adaptateur de montage (1) selon la revendication 4, **caractérisé en ce que** le cache (12) comporte des ergots d'encliquetage (14), qui, dans la position de montage de consigne glissée sur la platine (2), engagent dans des deuxièmes évidements (15) prévus à la platine (2) et fixent le cache (12) dans cette position à la platine (2) .

6. Adaptateur de montage (1) selon une des revendications 4 ou 6, **caractérisé en ce que** la platine (2) comporte des aides au positionnement optiquement visibles, par exemple, des flèches (16) imprimées, gravées ou estampées, qui facilitent un positionnement du cache (12) dans une position précise.

7. Adaptateur de montage (1) selon une des revendications 1 à 6, **caractérisé en ce que** la platine (2) est en zinc moulé sous pression, et que la pièce d'insertion est en zinc moulé sous pression ou en un matériau plastique.
